# FASCICULE DE BREVET EUROPEEN

(11) **EP 1 079 988 B1**
(45) Date de publication et mention de la délivrance du brevet: **30.07.2003**
(21) Numéro de dépôt: 99920885.3
(22) Date de dépôt: 19.05.1999
(51) Int. Cl.: B60P 3/08, B60P 1/43

(54) **STRUCTURE ARRIERE DE SUPPORT ET DE POSITIONNEMENT POUR UN VEHICULE DE TRANSPORT DE VOITURES**
HINTERE HALTERUNGS- UND POSITIONIERUNGSSTRUKTUR FÜR EIN FAHRZEUG ZUM TRANSPORT VON PERSONENKRAFTWAGEN
SUPPORTING AND POSITIONING REAR STRUCTURE FOR VEHICLE TRANSPORTING CARS

(30) Priorité: 20.05.1998 FR 9806498
(43) Date de publication de la demande: 07.03.2001
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: FR9901186
(87) Numéro de publication internationale: WO99059839

(56) Documents cités:
- EP-A- 0 818 350
- DE-A- 2 327 489
- FR-A- 1 605 260
- FR-A- 2 290 325
- FR-A- 2 455 527
- FR-A- 2 455 528
- GB-A- 888 476
- US-A- 4 221 422
- US-A- 4 239 275
- US-A- 4 372 727

## Description

La présente invention se rapporte à une structure arrière de support et de positionnement destinée à être montée à l'arrière d'un véhicule de transport de voitures, et plus particulièrement à une structure selon les caractéristiques du préambule de la revendication indépendante 1.

En raison des exigences de rentabilité dans les transports en général, mais de façon encore plus aiguë dans le transport volumique de voitures, les utilisateurs sont demandeurs d'une exploitation maximale du volume offert pour le chargement et de meilleures facilités de chargement et de déchargement.

Ainsi, les constructeurs ont conçu et réalisé des véhicules porte-voitures permettant une meilleure utilisation du volume disponible tout en respectant les diverses obligations spécifiques. Il s'agit notamment des contraintes dimensionnelles imposées par le code de la route, des impératifs techniques liés au gabarit des voitures, à la nécessité de maintenir une distance de sécurité entre elles pendant le transport et à la sécurité du personnel et des voitures pendant les manoeuvres de chargement et de déchargement.

La longueur du plan de chargement inférieur du camion, et à fortiori d'un train routier en général, est raccourcie par rapport au plan supérieur en raison de la présence de la cabine.

On procède de la façon suivante dans le cas d'un chargement classique.

Le plan inférieur de chargement est abaissé localement en ménageant des niches pour permettre à un des trains de roues de la voiture inférieure proche de la cabine de se retrouver à un niveau plus bas et donc de dégager un espace agrandi vers le haut. Cet espace peut être mis à profit pour accueillir le nez de la voiture suivante portée inclinée descendante vers l'arrière par une rampe individuelle dite de gerbage.

Cette présentation impose pour la première voiture portée par le plan inférieur de la remorque de se trouver en position inclinée montante vers l'arrière supportée par une rampe hydraulique de gerbage.

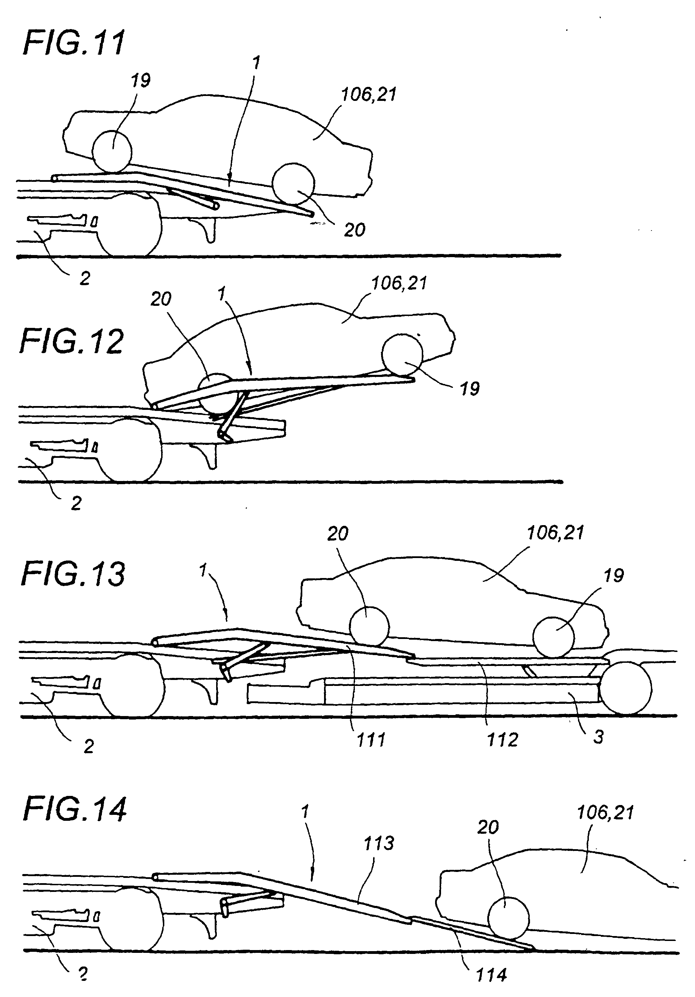

Cette configuration représentée sur la figure 11 illustre l'état de la technique antérieure.

Celle-ci porte en elle les trois inconvénients majeurs suivants.
. Elle nécessite des adaptations dans l'empattement du camion et la confection de niches dans ces zones choisies fréquemment par les constructeurs de camions pour loger les équipements et accessoires tels que le réservoir de carburant, les batteries, la bâche d'air comprimé et autres.
. La rampe de gerbage arrière du camion à incliner avant l'accès de la voiture représente en raison du manque de visibilité de l'espace environnant une difficulté d'accès et fait encourir un risque pour le personnel et la voiture.
. La rampe hydraulique de gerbage nécessaire à l'avant de la remorque représente un surcoût d'équipement important.

Un dispositif selon les caractéristiques du préambule de la revendication 1 est par exemple connu de FR-A-2 290 325 on EP-A-0 818 350.

Le but général de l'invention est de fournir un moyen pour améliorer l'occupation de la longueur utile de chargement en exploitant au mieux les positions d'imbrication des voitures dans l'espace situé entre la cabine du camion et l'arrière de la dernière remorque.

Elle a par ailleurs pour premier but spécifique, tout en permettant une grande rapidité de chargement et de déchargement des voitures en toute sécurité, d'occuper au mieux l'espace couvrant l'arrière du camion et le début de la remorque tout en facilitant et en réduisant les opérations de chargement et de déchargement.

L'invention a pour deuxième but spécifique l'amélioration de la sécurité des phases de chargement et de déchargement, notamment pour la voiture placée à l'arrière du camion, et ceci aussi bien pour le personnel que pour la voiture elle-même car l'opérateur n'avait précédemment que peu de visibilité pendant le chargement de la voiture en position inférieure arrière sur le camion.

Le principe même de l'invention repose sur le fait de charger la dernière voiture du plateau inférieur du camion dans une position inclinée dans laquelle elle se trouve partiellement au-dessus de la première voiture inférieure de la remorque.

La structure individuelle porteuse arrière pour un véhicule de transport de voitures selon l'invention présente de nombreux avantages dont on citera les principaux de la façon suivante :
. suppression de la rampe hydraulique de gerbage sur la remorque ;
. il devient inutile d'aménager l'espace situé dans l'empattement du camion au risque de devoir déplacer des équipements et inutile de réaliser des niches destinées à abaisser au moins l'un des trains de roues de la voiture transportée proche de la cabine sur le plan inférieur de chargement ;
. amélioration de la sécurité pour le personnel et la voiture grâce à la possibilité de charger la voiture arrière du plan inférieur du camion dans de bonnes conditions de visibilité ;
. on peut charger à plat la voiture arrière du plan inférieur du camion sur la structure selon l'invention en bénéficiant d'une position d'accès aisée, cette structure permettant dans un deuxième temps le positionnement définitif de la voiture ;
. la structure porteuse peut servir de rampe pour l'accès des voitures par l'arrière du camion en utilisation camion seul ;
. la structure porteuse assure le rôle de passerelle entre le camion et la remorque pendant les phases de chargement et de déchargement ;
. meilleure industrialisation par la fabrication en série liée à l'universalité de la structure porteuse ;
. optimisation du volume de chargement ;
. meilleure répartition des charges sur la remorque provenant de la nouvelle disposition des voitures ;
. polyvalence d'utilisation du véhicule car les configurations anciennes restent possibles en plus des nouvelles permises par l'invention.

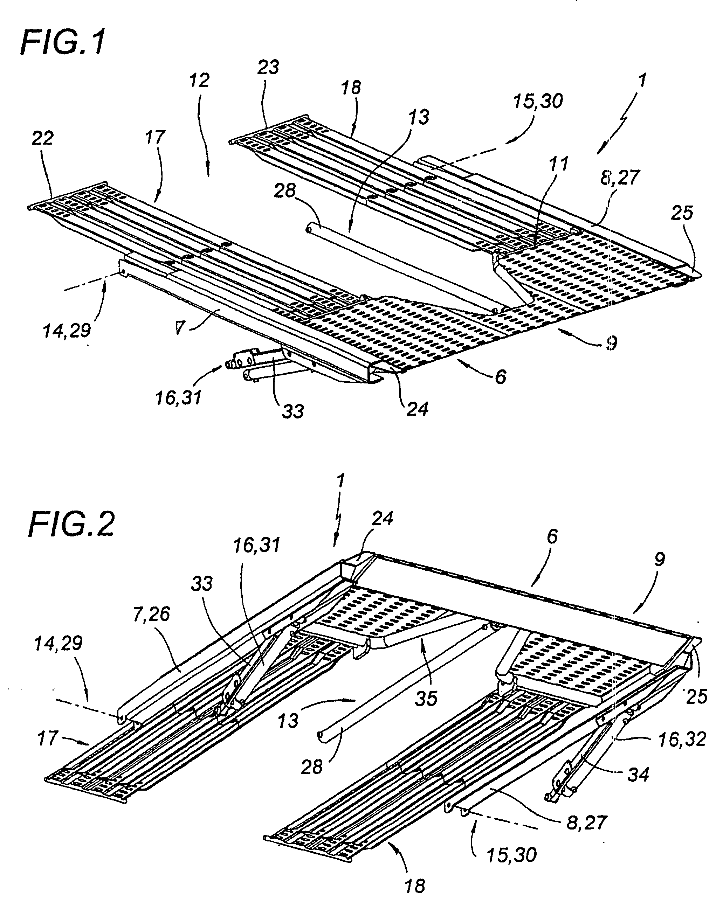

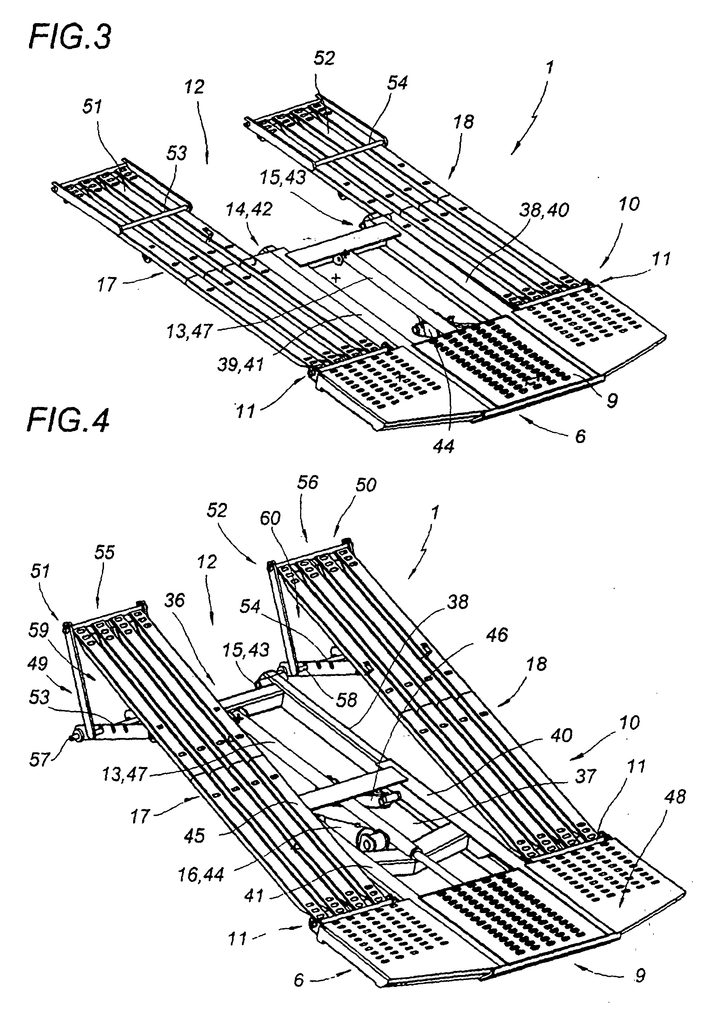

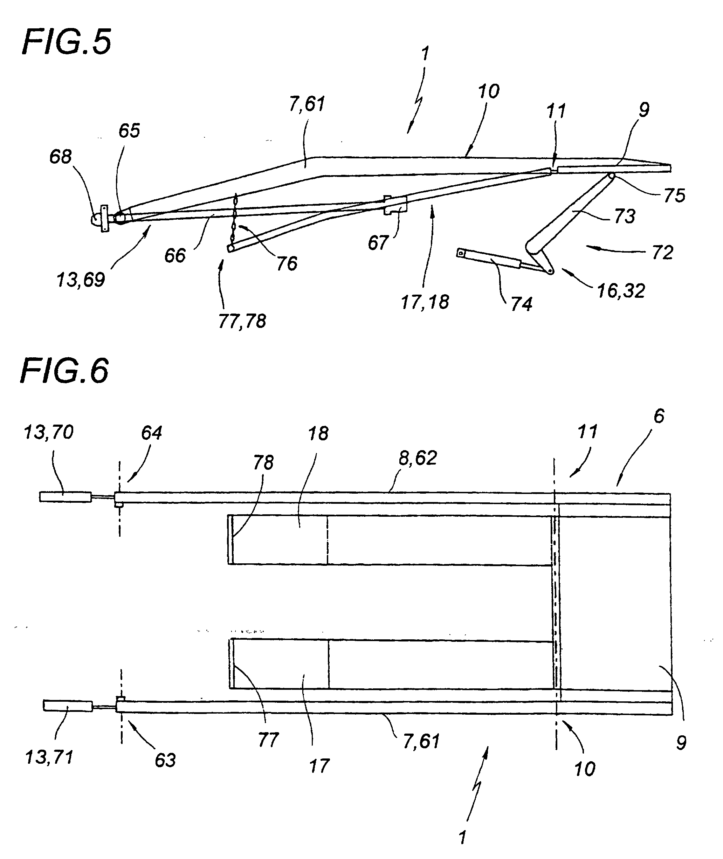

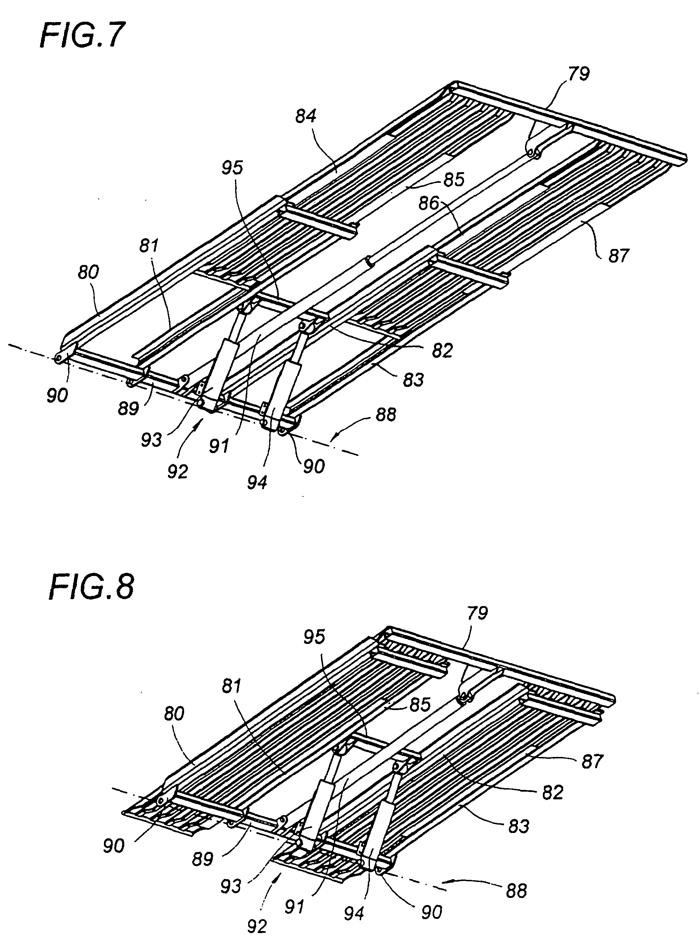

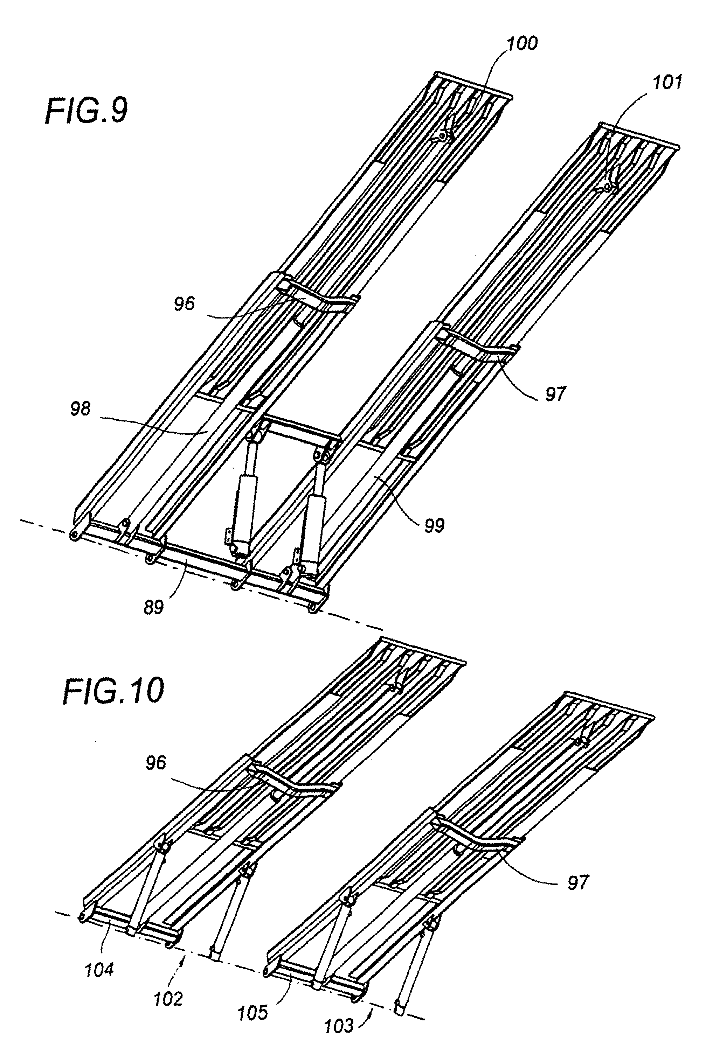

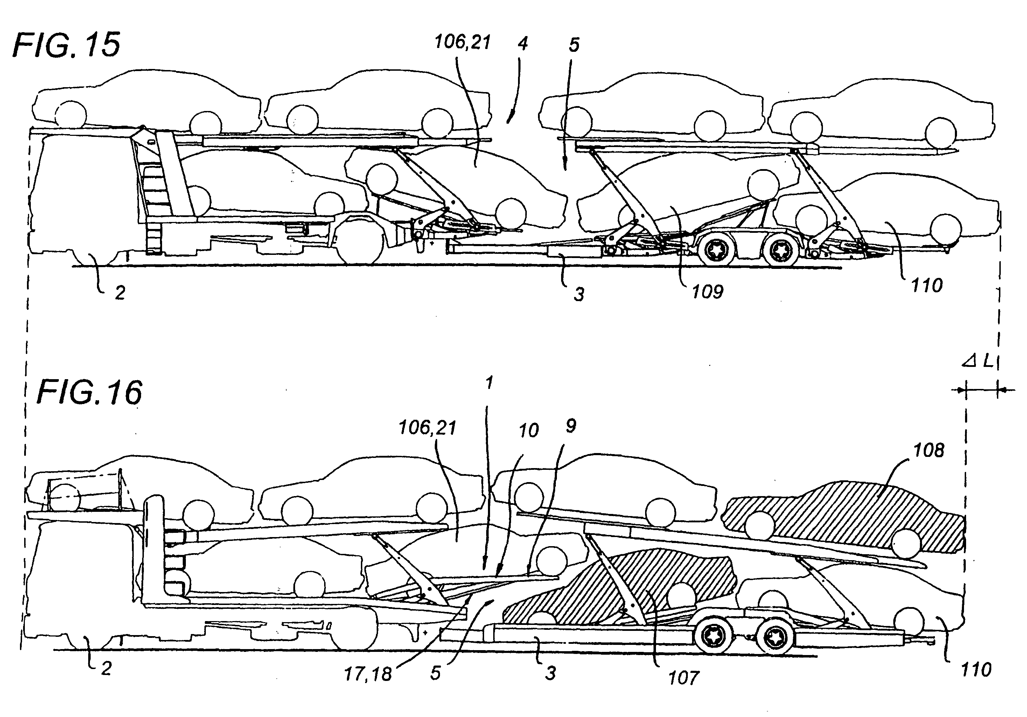

D'autres caractéristiques et avantages de l'invention apparaîtront dans la description qui suit, donnée à titre d'exemple non limitatif en référence au dessin dans leguel :
. la figure 1 est une vue en perspective de 3/4 dessus de la première variante ;
. la figure 2 est une vue en perspective de 3/4 dessous de la première variante ;
. la figure 3 est une vue en perspective de 3/4 dessus de la deuxième variante à l'état plan ;
. la figure 4 est une vue en perspective de 3/4 dessus de la deuxième variante à l'état relevé ;
. la figure 5 est une vue schématique de profil d'une troisième variante avec actionnement de translation par un couple de vis-écrou ;
. la figure 6 est une vue en plan de la troisième variante avec actionnement de translation par vérins hydrauliques ;
. la figure 7 est une vue en perspective d'une variante supplémentaire à plans de roulage jumelés représentée inclinée avec plans en extension ;
. la figure 8 est une vue en perspective de la même variante que celle de la figure 7 représentée inclinée avec plans de roulage rétractés ;
. la figure 9 est une vue en perspective d'une autre variante supplémentaire à plans de roulage indépendante et moyens d'inclinaison communs ;
. la figure 10 est une vue en perspective encore d'une autre variante supplémentaire à plans de roulage indépendants et moyens d'inclinaison distincts ;
. les figures 11 à 14 sont des schémas illustrant l'utilisation de la structure arrière montrant diverses positions et pour les dernières figures 13 et 14 respectivement une application en passerelle et une en rampe d'accès ;
. les figures 15 et 16 sont des vues comparatives de profil d'un véhicule porte-voitures respectivement équipé en position basse arrière du camion d'une structure porteuse classique et de la structure porteuse selon l'invention.

L'invention procède de l'idée générale inventive qui consiste à monter une structure 1 de support et de positionnement pour la réception d'une voiture à transporter à l'arrière du plan de chargement inférieur d'un camion 2 ou d'une remorque 3 porte-voitures et plus particulièrement sur la ou les remorque(s) intermédiaire(s) d'un train routier. Cette structure 1 forme un ensemble mécanique porteur mobile en mouvements d'ensemble, simples ou combinés, de translation-basculement. Cet ensemble est destiné à mieux occuper l'espace arrière 4 du camion 2 et avant 5 de la remorque ou d'une des remorques d'un train routier en vue d'atteindre les buts et de conférer les avantages énumérés ci-dessus.

De façon générale, la structure de support 1 comprend une base mécanique rigide 6 composée de deux longerons 7 et 8 dont les extrémités sont solidarisées à un support d'extrémité 9 constituant l'extrémité d'un plateau porteur 10 recevant la voiture à transporter. Ce dernier est réalisé dans sa version la plus simple en une seule partie mais dans d'autres cas, il peut être formé de deux parties planes articulées à pivotement entre elles par une articulation de pivotement par exemple du type charnière 11. Il s'agit du support d'extrémité 9 et d'une rampe inclinable double 12. Le plateau 10 porté par la base mécanique 6 et solidarisé à celle-ci est déplaçable dans son ensemble en translation dans l'axe longitudinal du camion 2 sous l'effet d'un moyen moteur de translation 13 par exemple du type vérin, matérialisé par un couple de vérins hydrauliques ou mécaniques et d'autre part en basculement autour d'axes transversaux d'extrémité 14 et 15 par un moyen moteur de basculement 16 provoquant le relevage et l'inclinaison des extrémités des longerons. Le mouvement d'ensemble peut ainsi résulter de la composition de ces deux mouvements de base : la translation et le basculement.

La longueur du support d'extrémité 9 peut varier sensiblement depuis la largeur d'une simple traverse jusqu'à la longueur totale du plateau.

La rampe double 12 est formée de deux supports parallèles ou plans de roulage 17 et 18 destinés au roulage et au maintien des deux roues avant 19 ou arrière 20 d'un véhicule 21 en position de transport.

La base 6 est un ensemble mécanique monté sur le châssis du camion à titre d'élément de carrosserie. Comme déjà indiqué, elle est mobile en mouvements de translation-basculement qui lui permettent de passer d'une position caractéristique de son utilisation dans une autre: chargement, transport, déchargement...

On décrira maintenant chacune des variantes en détail en se référant aux figures de 1 à 6.

Selon la première variante, représentée sur les figures 1 et 2 le plateau 10 est réalisé en deux parties articulées entre elles : d'une part le support d'extrémité 9 comportant deux voies latérales de roulage et d'autre part la rampe double 12 constituée des deux plans de roulage 17 et 18. Ces derniers sont articulés chacun à pivotement à l'une de leurs extrémités par l'articulation de pivotement du type charnière 11.

Les extrémités libres des plans de roulage 17 et 18 sont terminées chacune par un élément transversal 22 ou 23 de forme adaptée réalisant chacun un appui glissant ou roulant sur une surface plane solidaire du châssis du camion 2 utilisée comme support de déplacement. Cet appui glissant ou roulant et le mouvement provoqué par le moyen moteur de basculement 16 commandent l'inclinaison des plans de roulage 17 et 18.

Le support d'extrémité 9 du plateau 10 se déplace longitudinalement par ses longerons latéraux 24 et 25 le long de glissières 26 et 27 sous l'action motrice d'un vérin central 28 de translation. L'extrémité avant de chaque glissière 26 ou 27 est articulée à pivotement autour d'un axe fixe d'extrémité 29 ou 30 disposé transversalement par rapport au châssis du camion 2.

Le support d'extrémité 9 est solidarisé aux deux longerons latéraux 24 et 25.

L'ensemble est monté basculant sous l'effet de deux vérins de basculement 31 et 32 prévus chacun d'un côté sous les glissières 26 et 27. Chaque vérin est doublé parallèlement par une jambe de force respectivement 33 ou 34 montée pivotante et extensible à côté du vérin correspondant.

Les vérins de basculement 31 et 32 et les jambes de force associées 33 et 34 sont articulés à pivotement d'une part sur la sous-face des glissières 26 et 27 par exemple au voisinage d'une de leurs extrémités et d'autre part par les axes fixes d'extrémité 29 et 30 sur une pièce solidaire du châssis du camion 2.

On remarque sur la vue de dessous (figure 2) une structure tubulaire de renforcement 35 du support d'extrémité 9.

La deuxième variante représentée sur les figures 3 et 4 entre dans le même concept inventif dans la mesure où la structure est mobile dans un mouvement d'ensemble de translation-basculement et le plateau de chargement 10 est d'une seule pièce ou fractionné en deux parties 9 et 12 articulées entre elles à pivotement par l'articulation du type charnière 11, et dans la mesure où il existe à l'extrémité des plans de roulage 17 et 18 un appui glissant ou roulant sur une surface solidaire du châssis du camion.

Comme représenté, la base mécanique 6 de la structure porteuse 1 est formée dans cette variante d'un premier cadre 36 et d'un deuxième cadre 37 coulissant l'un dans l'autre par l'engagement de leurs longerons respectifs 38,39 et 40,41. Le premier cadre 36 est monté basculant autour de deux axes fixes d'extrémité 42 et 43 transversaux au camion, montés sur un support solidaire du châssis du camion. Ce premier cadre 36 est actionné par un vérin de basculement 44 doublé par deux jambes de force latérales 45 et 46. Le premier cadre 36 supporte le deuxième cadre 37 qui coulisse longitudinalement en translation le long des longerons 38,39 du premier cadre sous l'action d'un vérin de translation 47 monté sur le premier cadre 36.

Le deuxième cadre 37 porte par le support d'extrémité 9 à son extrémité libre un platelage 48 représenté sur les figures en trois parties solidarisées entre elles, platelage 48 destiné par exemple à maintenir les deux roues avant 19 ou arrière 20 d'un train de roues du véhicule routier 21 à transporter.

Le support d'extrémité 9 est articulé à pivotement par la charnière 11 à la rampe double inclinable 12 formée des deux plans de roulage 17 et 18 par exemple inclinables par exemple manuellement par deux supports 49 et 50 en échelle formant avec deux couples 51 et 52 de béquilles obliques jumelées par une traverse d'extrémité 53 ou 54 un ensemble triangulaire 55 ou 56 à ouverture angulaire variable. Ces ensembles triangulaires 55 ou 56 sont escamotables par affaissement sur et sous les extrémités libres des plans de roulage 17 et 18 comme on peut le voir sur la figure 3. Dans cette configuration, les supports 49 et 50 en échelle viennent s'escamoter sous les extrémités des plans porteurs.

On a décrit ci-dessus la version à deux plans de roulage distincts. On rappelle que le plateau peut être réalisé d'une seule pièce.

Les plans de roulage 17 et 18 sont en contact glissant ou roulant chacun avec une surface d'appui solidaire du châssis du camion 2 par leurs extrémités libres ou par les extrémités des supports 49 et 50 en échelle lorsqu'ils sont utilisés. Dans ce cas, afin de permettre leur déplacement sur ces surfaces d'appui, les extrémités des supports 49 et 50 en échelle sont équipés chacune d'une traverse 57 ou 58 formant un axe-support de roulage pourvu chacune d'un moyen de roulage 59 ou 60 par exemple un couple de roulettes.

Cette variante présente une grande variété de possibilités de mouvements de déplacement et d'inclinaison en raison des combinaisons entre les mouvements de translation, de basculement d'ensemble et de réglage manuel d'inclinaison des rampes de roulage 17 et 18.

La troisième variante représentée sur les figures 5 et 6 entre également dans le même concept général inventif dans la mesure où la structure 1 est placée en position arrière sur le plan inférieur de chargement du camion ou de la remorque d'un véhicule de transport de voitures et qu'elle est mobile selon un mouvement d'ensemble combiné de translation-basculement et présente une base mécanique 6 formée des deux longerons 7 et 8 et du support d'extrémité 9 solidarisé à l'extrémité de ceux-ci.

Les longerons 61 et 62 de la base mécanique 6 de cette variante sont particuliers car ils présentent un profil à deux pentes destinées à faciliter son dégagement dans une certaine configuration d'utilisation. Cette base mécanique 6 s'incline ou se relève dans son ensemble autour de deux axes mobiles de basculement 63 et 64 transversaux au camion, ménagés chacun sur un bloc-écrou tel que 65 relié ainsi à pivotement à chacune des extrémités libres de chaque longeron 61 ou 62. L'écrou de chaque bloc-écrou 65 est porté par une vis telle que 66 s'étendant entre un moteur hydraulique tel que 67 d'entraînement en rotation et un palier d'extrémité tel que 68 le tout constituant ensemble un vérin mécanique tel que 69.

Les axes de pivotement 63 et 64 en basculement sont mobiles chacun en translation sous l'effet d'un groupe de deux vérins hydrauliques 70 et 71 (variante de la figure 6) ou par le déplacement de l'écrou des vérins mécaniques 69. Ce mouvement est un mouvement de translation le long d'un axe longitudinal par rapport au véhicule.

Comme dans les autres variantes, le support d'extrémité 9 est solidarisé à chacune des extrémités des longerons 61 et 62. L'extrémité libre de la base mécanique est abaissable et relevable par un moyen extérieur d'inclinaison 72, par exemple par au moins un bras articulé de relevage 73 actionné par un vérin 74, ledit bras présentant une roulette 75 d'extrémité coopérant avec la sous-face du support d'extrémité 9 ou le chant inférieur des longerons 61 et 62 en vue de son ou de leur relevage ou de son ou de leur abaissement.

Ce support d'extrémité 9, si sa longueur le permet, peut supporter deux des roues avant 19 ou arrière 20 du véhicule 21 à transporter. La rampe inclinable double 12 est articulée à pivotement par exemple par la charnière 11 au support d'extrémité 9. Dans la version représentée, elle est inclinable manuellement et pour ce faire se trouve rattachée au niveau de ses extrémités libres par un lien ou un dispositif de retenue 76 éventuellement réglable par rapport aux longerons 61 et 62 du châssis 12. Par ailleurs, ces extrémités libres sont équipées de moyens de roulage ou de glissement 77 et 78 sur une surface solidaire du châssis.

La rampe 12 est équipée pour rouler ou glisser notamment dans la variante dans laquelle le support d'extrémité 9 est réalisé comme une simple traverse d'extrémité.

Il faut ajouter que dans toutes les variantes, les plans de roulage 17 et 18 sont susceptibles d'allongement par des rallonges escamotables, effaçables ou amovibles dont les extrémités libres présentent les mêmes moyens d'appui roulant ou glissant sur une surface solidaire du châssis du camion.

Les variantes supplémentaires représentées sur les figures 7 à 10 procèdent de la même idée générale inventive qui consiste à prévoir une structure individuelle arrière de support et de positionnement pour un véhicule de transport de voitures, structure individuelle mobile selon un mouvement simple ou composé résultant soit d'une translation le long de l'axe longitudinal du véhicule soit d'un basculement autour d'un axe transversal au véhicule soit d'une combinaison des deux mouvements de base précédents jusqu'à la position définitive de transport en vue d'utiliser encore mieux l'espace d'extrémité arrière du camion et l'espace d'extrémité avant de la remorque.

Parmi les variantes supplémentaires on distingue une variante supplémentaire à plans de roulage jumelés (figures 7 et 8) et deux variantes supplémentaires à plans de roulage indépendants et à moyens d'inclinaison communs (figure 9) ou distincts (figure 10).

Selon la première variante, les plans de roulage 17 et 18 sont jumelés par une traverse d'extrémité 79 constituant le support d'extrémité 9. Les plans de roulage 17 et 18 constituent une rampe double 12 portée à translation par une base de support inclinable formée de deux couples de glissières 80,81 et 82,83, chaque couple étant propre à l'un des plans de roulage 17 ou 18.

Dans la version représentée, des longerons 84,85 et 86,87 bordent chaque plan de roulage et coopèrent avec les glissières 80 à 83 pour le mouvement de translation.

La base de support est inclinable autour d'un axe géométrique 88 transversal au véhicule, et parallèle à une traverse d'articulation 89 portant des supports d'articulation tels que 90.

La rampe double 12 se déplace en translation sous l'effet d'un vérin longitudinal 91 monté entre la traverse d'extrémité 79 et la traverse d'articulation 89.

Un ensemble moteur de basculement 92 par exemple, un couple de vérins 93 et 94 montés articulés entre un support fixe du véhicule et un élément transversal 95 solidaire des glissières en regard 81 et 82 assure le basculement de l'ensemble.

Les autres variantes supplémentaires (figures 9 et 10) sont à plans de roulage 17 et 18 indépendants qui coulissent le long de glissières jumelées entre elles d'une part par un support de jumelage par exemple incurvé 96 ou 97 pour l'extrémité arrière et d'autre part par la traverse d'articulation 89.

Des vérins mécaniques individuels 98 et 99 de translation sont montés sur chacun des plans de roulage 17 et 18 entre la traverse d'articulation 89 et un point d'actionnement 100,101 de la tige du vérin de translation situé en sous face à l'extrémité de chaque plan de roulage. Ce point d'actionnement peut se matérialiser par une articulation de pivotement comme représenté sur la figure 9.

L'ensemble moteur de basculement est réalisé soit comme précédemment sous la forme d'un couple de vérins agissant sur un élément transversal 95 (figure 9) soit par un seul vérin, soit sous la forme de deux couples indépendants 102 et 103 de vérins articulés chacun entre un point fixe du châssis du véhicule et la glissière correspondante (figure 10). Pour cette dernière variante, la traverse d'articulation 89 est alors individualisée en deux tronçons 104 et 105.

Il est évident que pour les variantes à plans de roulage indépendants en translation des figures 9 et 10, dont la dernière dans laquelle ils sont en plus indépendants en inclinaison, les mouvements de translation de ces deux plans de roulage 17 et 18 doivent être synchronisés. Concernant la dernière variante la synchronisation s'impose aussi pour les mouvements d'inclinaison.

Les figures 15 et 16 illustrent l'un des principaux avantages de l'invention.

On remarque deux importantes différences dans la capacité de chargement pour un même camion porte-voitures 2 équipé ou non de la structure individuelle porteuse 1 selon l'invention.

Grâce au chargement en extension arrière inclinée vers le haut de la dernière voiture 106 du plan de chargement inférieur, les longueurs respectives dites hors tout du même véhicule chargé diffèrent d'une diminution de longueur "ΔL" en faveur du véhicule possédant la structure porteuse selon l'invention et ceci tout en permettant le chargement au moins d'une voiture 107 de plus grande taille sur le plan inférieur de chargement voire au moins un modèle 108 de taille encore supérieure aux extrémités de la remorque. Ces voitures de plus grande taille apparaissent en zones hachurées sur la figure 15.

Les figures 15 et 16 montrent de façon simple et convaincante le gain en capacité réalisé grâce à l'emploi de la structure de support porteuse 1 selon l'invention.

Les deux voitures 109 et 110 du plan de chargement inférieur de la remorque 3 du chargement classique (figure 15) sont déplacées vers l'avant. Il en résulte la possibilité de placer un plus gros modèle de voiture 107 à l'emplacement avant inférieur de la remorque, et d'accepter un modèle 108 de plus grande taille par exemple en position arrière supérieure, de garder la même voiture 110 à l'arrière tout en diminuant de surcroît de "ΔL" la longueur hors tout du véhicule chargé. Ces avantages procurent une plus grande latitude à l'utilisateur pour la réalisation de son chargement tout en respectant les réglementations en application et peuvent être mis à profit pour ranger des voitures de gabarit plus important représenté par des prolongations en traits brisés (figure 12).

L'invention ne se limite pas à ces seuls avantages.

Comme on peut le constater à l'observation des figures 11 à 14, la structure de support 1 selon l'invention peut servir à différents usages.

Elle est porteuse dans deux configurations. La première configuration est celle dans laquelle la voiture transportée 21 se trouve chargée à l'arrière du camion 2 dans une position avancée dans le cas par exemple d'un transport camion seul (figure 11).

La deuxième configuration est celle du transport avec remorque 3 dans laquelle la voiture transportée 21,106 est surélevée et reculée à l'arrière du véhicule permettant de ménager sous la voiture transportée un espace utilisable pour la voiture 107 en position inférieure avant sur la remorque (figure 12).

La structure selon l'invention permet également de servir de passerelle 111 entre le camion 2 et la remorque 3 dans une position abaissée de la structure porteuse 1 dans laquelle elle se trouve projetée vers l'arrière pour servir d'élément de liaison entre l'arrière du camion 2 et par exemple un éventuel plateau 112 de remorque 3 (figure 13).

Une dernière utilisation (figure 14) concerne une configuration en rampe d'accès ou de descente 113 à l'arrière du camion 2. A cet effet, la rampe d'accès 113 est prolongée par un rail de chargement 114 assurant la continuité du plan de descente jusqu'au sol.

## Revendications

1. Structure (1) de support et de positionnement pour au moins une des voitures d'un ensemble routier articulé de transport de voitures formé d'un camion (2) et d'une ou de plusieurs remorques (3), la structure (1) étant installée à l'emplacement arrière inférieur du camion (2) ou d'une remorque (3), **caractérisée en ce que** :
. la structure (1) est mobile selon un mouvement résultant, soit d'une translation le long de l'axe longitudinal du véhicule produite par des moyens de translation d'un plateau porteur (10), soit d'un basculement provoqué par des moyens de basculement d'une base mécanique (6) autour d'un axe de pivotement transversal au véhicule, soit d'une combinaison de ces deux mouvements de base jusqu'à la position définitive de transport inclinée montante vers l'arrière du camion (2) en vue d'utiliser encore mieux l'espace d'extrémité arrière du camion et l'espace d'extrémité avant de la remorque (3),
. et **en ce que** la structure (1) est constituée de la base mécanique (6) et du plateau porteur (10) formé d'un support d'extrémité (9) et de deux plans de roulage (17) et (18).

2. Structure de support selon la revendication 1, **caractérisée en ce que** le plateau porteur (10) est constitué d'une seule pièce avec les deux plans de roulage (17) et (18).

3. Structure de support selon la revendication précédente, **caractérisée en ce que** les deux plans de roulage (17) et (18) sont séparés par un évidement.

4. Structure de support selon la revendication 2, **caractérisée en ce que** les deux plans de roulage (17) et (18) sont articulés à pivotement au support d'extrémité (9).

5. Structure de support selon l'une quelconque des revendications précédentes, **caractérisée en ce que** les deux plans de roulage (17) et (18) sont pourvus à l'arrière de moyens de roulement ou de glissement sur une surface solidaire du châssis du camion.

6. Structure de support selon l'une des revendications 2 à 5 **caractérisée en ce que** les plans de roulage sont relevables.

7. Structure de support selon la revendication 1 **caractérisée en ce que** le support d'extrémité (9) est réduit à une simple traverse.

8. Structure de support selon la revendication 1 ou 7 **caractérisée en ce que** la base mécanique est constituée de deux longerons et du support d'extrémité (9) qui est solidaire des longerons.

9. Structure de support selon la revendication 1, **caractérisée en ce que** le mouvement de translation est obtenu par des vérins mécaniques ou hydrauliques.

10. Structure de support selon la revendication 1, **caractérisée en ce que** le mouvement de basculement s'effectue autour d'axes de pivotement solidaires du châssis du camion.

11. Structure de support selon la revendication précédente, **caractérisée en ce que** les axes de pivotement sont mobiles dans la direction longitudinale du camion.

12. Structure de support selon la revendication 1 **caractérisée en ce que** le mouvement de basculement est obtenu en soulevant ou en abaissant une des extrémités de la base mécanique (6).

13. Structure de support selon la revendication 1 **caractérisée en ce que** le mouvement de translation du plateau porteur (10) est obtenu par coulissement sur ou le long de profilés portant l'extrémité du plateau (10).

14. Structure de support selon la revendication 1 ou 11 ou 12 **caractérisée en ce que** la base mobile (6) est formée de deux longerons parallèles dont les extrémités situées d'un même côté se déplacent linéairement dans l'axe longitudinal du véhicule, **en ce que** l'extrémité opposée du châssis ou du plateau est inclinable par le déplacement de l'extrémité d'un bras articulé actionné en pivotement par un vérin et **en ce que** le corps du plateau forme une rampe inclinable et se trouve soutenu par deux liens le reliant au niveau de son extrémité à chacun des longerons du châssis.

15. Structure de support selon la revendication 1 ou 13 **caractérisée en ce que** le châssis est formé de deux longerons se déplaçant à guidage le long de glissières immobilisées longitudinalement chacune à l'une de leurs extrémités par une articulation de pivotement solidaire du châssis du véhicule et reliées chacune à une zone fixe du camion par une liaison double à vérin et à jambe de force de manière à provoquer un basculement d'ensemble en inclinaison, **en ce que** la deuxième partie du plateau est individualisée en une rampe double (12) formée de deux plans de roulage (17) et (18) articulés chacun à pivotement à l'extrémité du plateau, ladite extrémité du plateau étant actionnée en translation par un vérin longitudinal et **en ce que** les extrémités libres des plans de roulage sont munies chacune d'une traverse d'extrémité à profil circulaire ou arrondi d'appui-glissant permettant le déplacement chargé sur une surface du châssis du camion.

16. Structure de support selon la revendication 1, **caractérisée en ce** la base mécanique (6) est formée de deux cadres coulissant l'un dans l'autre, le premier châssis est porteur de l'ensemble alors que le deuxième cadre porte l'extrémité du plateau, celui-ci étant mobile en translation le long du premier châssis par l'action d'un vérin de translation, en ce que le premier cadre est inclinable par un vérin de basculement et en ce que la deuxième partie du plateau est individualisée en deux plans de roulage indépendants articulés à pivotement à l'extrémité du plateau, lesdits plans présentant chacun au niveau de leur extrémité libre un support à inclinaison variable.

17. Structure de support selon la revendication précédente, **caractérisée en ce que** chaque support à inclinaison variable est formé d'un support en échelle à encoches, est monté pivotant sur le plan de roulage par l'une de ses extrémités et présente à son autre extrémité des moyens de roulement pour le déplacement chargé de cette extrémité sur une surface du châssis du camion, les extrémités libres des plans de roulage étant rappelées en appui chacune par un couple de béquilles jumelées articulées en pivotement sur cette extrémité et immobilisables manuellement par les autres extrémités des béquilles jumelées sur l'échelle en des positions successives prédéterminées par l'engagement sur chaque support en échelle d'une traverse d'extrémité reliant les extrémités basses des béquilles jumelées dans deux encoches en regard de chaque support en échelle.

18. Structure de support selon la revendication 1 **caractérisée en ce que** les plans de roulage (17) et (18) sont mécaniquement indépendants en translation.

19. Structure de support selon la revendication précédente **caractérisée en ce que** les plans de roulage (17) et (18) sont mécaniquement indépendants en translation et en inclinaison.

## Patentansprüche

1. Trag- und Positionierstruktur (1) für wenigstens ein Fahrzeug einer aus einem Lastwagen (2) und einem oder mehreren Anhängern (3) gebildeten Gelenklästzug-Anordnung zum Transport von Fahrzeugen, wobei die Struktur (1) im hinteren unteren Abschnitt des Lastwagens (2) oder eines Anhängers (3) angeordnet ist, **dadurch gekennzeichnet, dass**
- die Struktur (1) gemäß einer resultierenden Bewegung, entweder einer durch Translationsmittel einer Tragebene (10) hervorgerufenen Translation entlang der Fahrzeug-Längsachse oder einer durch Kippmittel einer mechanischen Basis (6) bewirkten Kippbewegung um eine quer zum Fahrzeug angeordnete Schwenkachse oder einer Kombination dieser beiden Grundbewegungen bis zu einer endgültigen, geneigten und in Richtung des Hecks des Lastwagens ansteigenden Transportposition beweglich ist, um den Raum im hinteren Bereich des Lastwagens und den Raum im vorderen Bereich des Anhängers besser zu nutzen,
- und dass sich die Struktur (1) aus der mechanischen Basis (6) und der aus einer endständigen Stützeinrichtung (9) und zwei Fahrflächen (17, 18) gebildeten Tragebene (10) zusammensetzt.

2. Tragstruktur nach Anspruch 1, **dadurch gekennzeichnet, dass** die Tragebene (10) mit den beiden Fahrflächen (17, 18) einstückig ausgebildet ist.

3. Tragstruktur nach dem vorangehenden Anspruch, **dadurch gekennzeichnet, dass** die beiden Fahrflächen (17, 18) durch eine Aussparung getrennt sind.

4. Tragstruktur nach Anspruch 2, **dadurch gekennzeichnet, dass** die beiden Fahrflächen (17, 18) schwenkbar an der endständigen Stützeinrichtung (9) angelenkt sind.

5. Tragstruktur nach einem der vorangehenden Ansprüche, **dadurch gekennzeichnet, dass** die beiden Fahrflächen (17, 18) im hinteren Bereich mit Mitteln zum Rollen oder Gleiten auf einer mit dem Fahrgestell des Lastwagens verbundenen Fläche versehen sind.

6. Tragstruktur nach einem der Ansprüche 2 bis 5, **dadurch gekennzeichnet, dass** die Fahrflächen anhebbar sind.

7. Tragstruktur nach Anspruch 1, **dadurch gekennzeichnet, dass** die endständige Stützeinrichtung (9) zu einer einfachen Querstrebe zurückgebildet ist.

8. Tragstruktur nach Anspruch 1 oder 7, **dadurch gekennzeichnet, dass** die mechanische Basis aus zwei Längsträgern und der endständigen Stützeinrichtung (9) gebildet ist, die mit den Längsträgern verbunden ist.

9. Tragstruktur nach Anspruch 1, **dadurch gekennzeichnet, dass** die Translationsbewegung durch mechanische oder hydraulische Zylinder erreicht wird.

10. Tragstruktur nach Anspruch 1, **dadurch gekennzeichnet, dass** die Kippbewegung um mit dem Fahrgestell des Lastwagens verbundene Schwenkachsen erfolgt.

11. Tragstruktur nach dem vorangehenden Anspruch, **dadurch gekennzeichnet, dass** die Schwenkachsen in der Längsrichtung des Lastwagens beweglich sind.

12. Tragstruktur nach Anspruch 1, **dadurch gekennzeichnet, dass** die Kippbewegung durch Anheben oder Absenken eines der Enden der mechanischen Basis (6) erreicht wird.

13. Tragstruktur nach Anspruch 1, **dadurch gekennzeichnet, dass** die Translationsbewegung der Tragebene (10) durch Gleiten auf oder entlang von Profilen erreicht wird, die das Ende der Ebene (10) tragen.

14. Tragstruktur nach Anspruch 1 oder 11 oder 12, **dadurch gekennzeichnet, dass** die mobile Basis (6) aus zwei parallelen Längsträgern gebildet ist, deren auf einer gleichen Seite angeordnete Enden sich geradlinig entlang der Fahrzeug-Längsachse bewegen, dass das gegenüberliegende Ende des Gestells oder der Ebene durch Verschieben des Endes eines mittels eines Zylinders in Schwenkbewegung versetzten Gelenkarms neigbar ist und dass der Körper der Ebene eine neigbare Rampe bildet und durch zwei Verbindungsmittel gestützt wird, die ihn in seinem Endbereich mit jedem der Längsträger des Gestells verbinden.

15. Tragstruktur nach Anspruch 1 oder 13, **dadurch gekennzeichnet, dass** das Gestell aus zwei Längsträgern gebildet ist, die sich entlang jeweils an einem ihrer Enden durch ein mit dem Fahrgestell des Fahrzeugs verbundenes Schwenkgelenk in Längsrichtung festgelegte Führungsschienen geführt bewegen und jeweils mit einem bestimmten Bereich des Lastwagens durch eine doppelte Verbindung mit Zylinder und Stütze verbunden sind, um ein gemeinsames Verkippen in eine geneigte Stellung zu bewirken, dass der zweite Teil der Ebene als eigenständige Doppelrampe (12) aus zwei Fahrflächen (17, 18) ausgebildet ist, die jeweils schwenkbar am Ende der Ebene angelenkt sind, wobei das Ende der Ebene durch einen Längszylinder in Translationsbewegung setzbar ist, und dass die freien Enden der Fahrflächen jeweils mit einer endständigen Querstrebe mit kreisförmigem oder abgerundetem Querschnitt als Gleitauflage versehen sind, die ein Verschieben auf einer Fläche des Fahrgestells des Lastwagens unter Last erlaubt.

16. Tragstruktur nach Anspruch 1, **dadurch gekennzeichnet, dass** die mechanische Basis (6) aus zwei ineinander gleitenden Rahmen gebildet ist, wobei der erste Rahmen die Anordnung trägt, während der zweite Rahmen das Ende der Ebene trägt, die für Translationsbewegungen entlang des ersten Rahmens unter Wirkung eines Translationszylinders beweglich ist, dass der erste Rahmen mittels eines Kippzylinders neigbar ist und dass der zweite Teil der Ebene in zwei unabhängige Fahrflächen unterteilt ist, die schwenkbar am Ende der Ebene angelenkt sind, wobei die Flächen jeweils im Bereich ihres freien Endes eine Stütze mit veränderbarer Neigung aufweisen.

17. Tragstruktur nach dem vorangehenden Anspruch, **dadurch gekennzeichnet, dass** jede Stütze mit veränderbarer Neigung aus einer mit Einkerbungen versehenen Leiter gebildet ist, mit einem ihrer Enden schwenkbar auf der Fahrfläche angeordnet ist und an ihrem anderen Ende Rollmittel zum Verschieben dieses Endes unter Last auf einer Fläche des Fahrgestells des Lastwagens aufweist, wobei die freien Enden der Fahrflächen jeweils auf einem gekoppelten, schwenkbar an diesem Ende angelenkten Ständerpaar aufliegen und durch die anderen Enden der gekoppelten Ständer auf der Leiter in aufeinander folgenden vorbestimmten Stellungen durch Eingreifen einer endständigen Querstrebe, die die unteren Enden der gekoppelten Ständer verbindet, in zwei Einkerbungen bezüglich jeder Leiterstütze manuell festlegbar sind.

18. Tragstruktur nach Anspruch 1, **dadurch gekennzeichnet, dass** die Fahrflächen (17, 18) bei Translation mechanisch unabhängig sind.

19. Tragstruktur nach dem vorangehenden Anspruch, **dadurch gekennzeichnet, dass** die Fahrflächen (17, 18) bei Translation und Neigung mechanisch unabhängig sind.

## Claims

1. A supporting and positioning device (1) for at least one of the cars on an articulated car carrier formed of a truck (2) and one or more trailers (3), in which the device is installed at the lower rear position on the truck (2) or the trailer (3) **characterized in that** :
• the device (1) moves either in translation along the longitudinal axis of the vehicle, produced by translation means on the support platform (10), or angularly, produced by inclining means on a mechanical base (6) around a pivot axle transverse to the vehicle, or in a combination of these two basic movements, until it attains the definitive transport position tilted upward toward the rear of the truck (2) in order to improve the use of the space at the rear end of the truck and the space at the front end of the trailer (3);
• and **in that** the device (1) consists of the mechanical base (6) and the supporting platform (10) formed of an end support (9) and two rolling surfaces (17) and 18).

2. A support device according to claim 1 **characterized in that** the support platform (10) consists of a single piece encluding two rolling surfaces (17) and (18).

3. A support device according to the preceding claim **characterized in that** the rolling surfaces (17) and (18) are separated by a groove.

4. A support device according to claim 2 **characterized in that** the two rolling surfaces (17) and (18) are pivotably articulated to the end support (9).

5. A support device according to any one of the preceding claims **characterized in that** the two rolling surfaces (17) and (18) are equipped at the rear with means for rolling or sliding along a surface integral with the chassis of the truck.

6. A support device according to one of claims 2 through 5 **characterized in that** the rolling surfaces can be raised.

7. A support device according to claim 1 **characterized in that** the end support (9) is reduced to a simple traverse.

8. A support device according to claim 1 or 7 **characterized in that** the mechanical base consists of two struts and an end support (9) integral with the struts.

9. A support device according to claim 1 **characterized in that** translational movement is obtained through the use of mechanical or hydraulic cylinders.

10. A support device according to claim 1 **characterized in that** the tilting motion takes place using pivot axles integral with the truck chassis.

11. A support device according to the preceding claim **characterized in that** the pivot axles are movable in the longitudinal direction of the truck.

12. A support device according to claim 1 **characterized in that** the tilting motion is obtained by raising or lowering one of the extremities of the mechanical base (6).

13. A support device according to claim 1 **characterized in that** the translational movement of the support platform (10) is obtained by sliding it on or along the elements supporting the end of the platform (10).

14. A support device according to claim 1 or 11 or 12 **characterized in that** the movable base (6) is formed of two parallel struts, and the strut extremities located on the same side are displaced linearly along the longitudinal axle of the vehicle, **in that** the opposite extremity of the chassis or the platform can be inclined by displacing the extremity of an articulated arm which is pivoted by a cylinder, and **in that** the platform body forms an inclinable ramp and is supported by two connectors joining it, near its extremity, to each strut on the chassis.

15. A support device according to claim 1 or 13 **characterized in that** the chassis is formed of two struts guided in displacement along slides which are each longitudinally immobilized at one end by a pivot articulation integral with the vehicle chassis, and each connected to a fixed zone on the truck by a dual cylinder and brace connection so as to incline the entire unit, **in that** the second portion of the platform consists of a double ramp (I 2) formed of two rolling surfaces (17) and (18) each pivotably articulated to the end of the platform, said platform extremity being activated to move in translation by a longitudinal cylinder, and **in that** the free ends of the rolling surfaces are each equipped with traverse having a circular or rounded extremity allowing them to slide along a surface of the truck chassis.

16. A support device according to claim 1 **characterized in that** the mechanical base (6) is formed of two frames sliding inside each other, with the first chassis supporting the unit and the second frame supporting the end of the platform, the latter moving in translation along the first chassis when activated by a translation cylinder, **in that** the first frame can be inclined by a inclining cylinder, and **in that** the second portion of the platform forms two independent rolling surfaces pivotably articulated to the end of the platform, said surface each having a variable angle support at its free end.

17. A support device according to the preceding claim **characterized in that** each variable angle support is formed of a graduated support with notches, is pivotably attached to the rolling surface by one extremity and has at its other extremity a means for movement so the extremity can move along a surface of the truck chassis, with the free ends of the rolling surfaces being repositioned in contact by a pair of braces pivotably articulated to said extremity and which can be manually immobilized with the other ends of the braces connected to the graduated support in successive predetermined positions by engaging them in each graduated support of an end traverse joining the lower extremities of the connected braces in two opposing notches on each graduated support.

18. A support device according to claim 1 **characterized in that** the rolling surfaces (17) and (18) are mechanically independent in translation.

19. A support device according to the preceding claim **characterized in that** the rolling surfaces (17) and (18) are mechanically independent in translation and in angular movement.
